# EUROPEAN PATENT APPLICATION

(11) **EP 0 985 865 A2**
(43) Date of publication of application: **15.03.2000**
(21) Application number: 99115670.4
(22) Date of filing: 09.08.1999
(51) Int. Cl.: F16L 7/00

(54) **Spacer for pipelines**

(30) Priority: 11.09.1998 IT MI981994
(71) Applicant: Zanichelli, Gianni, 20099 Sesto S. Giovanni (Milano) (IT)
(72) Inventor: Zanichelli, Gianni, 20099 Sesto S. Giovanni (Milano) (IT)
(74) Representative: Robba, Pierpaolo

(57) **Abstract**

A spacer collar for pipelines is formed by one or more flexible spacer sections to be applied onto a pipe portion to be inserted in a larger diameter casing. Each section comprises a central portion (15) provided on one of its faces with spacing reliefs (6) having a cylindrical cross-section and being transversely wavy, and two fitting end portions (11, 12) provided with teeth for joining two adjacent end portions.

Co-operating means (3, 8, 9) are provided on said fitting portions (11, 12) of said spacer section for longitudinally guiding and radially engaging two adjacent fitting end portions (11, 12), and the inner surface of the sections (10) forming the spacer is provided with interrupted projections (23) with a longitudinal or slightly inclined pattern.

## Description

The present invention relates to pipelines for conducting liquids or fluids, and more particularly relates to a spacer or spacing member for pipelines incorporating considerable improvements with respect to the presently manufactured spacers. Inductively such pipes have diameters comprised between a few centimetres and one meter and more, and are employed for example, for conducting storm sewage, drainage, oil, gases such as methane, power cables and signal cables, etc.

In laying pipelines for conducting liquids or fluids, hereinafter shortly designated as pipelines, it is often necessary to insert a portion of the pipeline into a larger tube or casing, for example when crossing a rise or hollow. The inner tube or carrier pipe has to be properly centred and spaced from the casing and electrically insulated therefrom. To this aim there are used spacing collars of plastic material formed by one or more lengths connected together and provided with projections. Besides to mechanically protect the carrier pipe, these spacing collars further accomplish the task of conveying possible leakages of the conducted fluids.

The two tubes or pipes are therefore to be further electrically insulated and tight. Moreover the spacing collars prevent damages to the coating (when present) of the carrier pipe when the pipes are inserted one into the other. To this aim there are still used plastic collars formed by two or more members assembled together with metal bolts that however do not ensure the insulation between the two pipes in case of a tube break, since the loosed bolt makes contact between the main pipe and the casing.

It is further known a widely diffused spacer, formed by generally flat plastic material sections provided with fitting end portions adapted to join two or more members together, and provided with spacing members of cylindrical shape having different heights. The flat sections are connected to each other by means of teeth and guide profiles formed on the fitting portions and engaging one to another. The joined sections are then disposed around the carrier pipe and the spacer is tightened (i.e. circumferenfially shortened) by means of a suitable clamp geared down by means of gears to reduce the effort required to tighten the spacer. For manufacturing reasons the cylindrical spacing members projecting from the spacer sections can terminate with a spherically-shaped upper end or be opened upwardly. In this latter case the upwardly opened cylindrical member requires a larger effort for being advanced along the casing pipeline and can easily get stuck against protuberances of the pipeline inner surface, such as welding beads.

A drawback of these known collars resides in that it is very difficult to slide back the sections, i.e. in the direction opposite to the one of the teeth engagement, whereby it is not allowed to correct an excessive shortening of the spacer when two or more fitting portions have been excessively inserted one into the other. This drawback makes difficult to achieve a uniform stress distribution, and can lead to use a number of sections surplus to requirements in order to compensate such excessive shortenings when assembling the sections together. Further, in some cases, the length of the additional section to be employed is longer than the missing arc length, the assembled spacer has to be discarded anyhow.

A further drawback of the known spacers comes from the low stiffness of the cylindrical spacing members, particularly when higher than a few centimetres. In the known spacers there are provided ribs connecting the cylindrical spacing members to increase their stiffness, however this expedient is often not enough since the rib can extend only for a portion of the members overall height. In case the spacers are too flexible they can bend when a thrust is applied to advance the pipe, so that they further increase the resistance to the advancing. This drawback is particularly critical when using cylinders terminating with a hollow portion.

Moreover, the fitting end portions of the spacer sections are provided with guide profiles, formed by a plurality of aligned and spaced short reliefs that can be caught when the fitting portions are joined together. Finally on the lower or inner side (i.e. the one contacting the usually soft coating of the pipeline), there are provided longitudinal continuous reliefs that are knurled and can cut such coating thus making easier its breaking.

The object of the present invention is to overcome the above drawbacks and limitations of the prior art by providing a new and improved spacer section.

The invention achieves these objects through a spacer section as claimed in claim 1. Further advantageous characteristics are recited in the dependent claims.

The novel spacer sections for pipelines of the present invention are provided with a device for joining the sections through a simple operation and for preventing their disengagement once the two sections, or the plurality of sections (in pipelines of large diameter) have been joined together. The spacer installation is thus rendered easier and such as to allow a (subsequent) more uniform adjustment of the tractive forces acting on the sections.

Further, in accordance with the invention, the reliefs or pads 6 projecting from the base of the spacer section and acting as spacing members between the two tubes, extend in a continuous manner transversely to the member 10 and have a transversely waved configuration. More precisely, the pads are formed as a single block extending over the whole width of the spacer, are of hemispherical shape in the upper part and wavy lengthwise. Such configuration ensures a minimum contact area with the pipe forming the casing, thus reducing the coefficient of friction. Thanks to the so shaped pads the collars formed by spacer sections according to the invention are more compact and self-bearing in comparison to collars formed with single cylinders, and have a drastically reduced coefficient of friction whereby a very compact and self-bearing rigid spacer section is achieved.

The invention will now be disclosed with reference to the attached drawings illustrating a preferred but non-limiting embodiment of the invention, in which:
Fig. 1 is a plan view of a spacer section according to the invention in its flat configuration;
Fig. 2 is a side view of the spacer section of Fig. 1;
Fig. 3 is a cross-section view along line x-x of the spacer of Fig. 1;

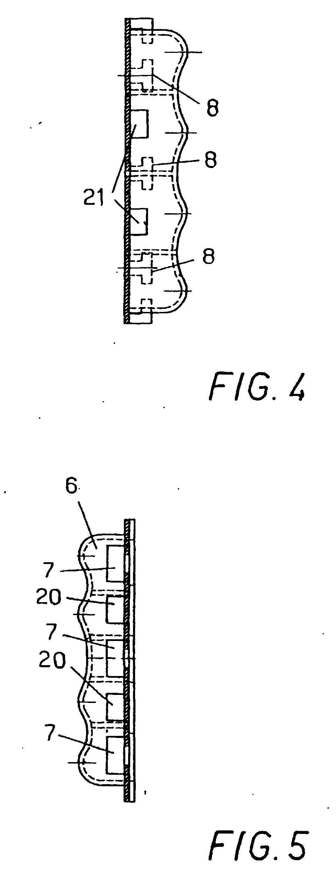

Fig. 4 is a cross-section view along line y-y of the spacer of Fig. 1;
Fig. 5 is a cross-section view along line z-z of the spacer of Fig. 1;
Figures 6 and 7 illustrate another embodiment of the invention.

In the following reference will be made to collars formed by two or more sections, however the invention also applies to situations where - particularly for small diameters pipelines - the spacer is formed by a single section the ends of which are joined together.

Referring to the Figures, a spacer according to the invention generally comprises a plurality of ribbon-like members or sections 10 of a flexible plastic material 10 having a thickness generally comprised between 1 and 4 mm. Two or more of such spacer sections are joined one to another and tightly wrapped around the pipeline at their ends 11, 12 provided with unidirectional coupling or engagement means 13, 14, in particular toothed areas and engaging profiles 2, that allow their insertion but prevent their sliding out.

The section 10 is provided with spacing members or pads 6 projecting from one of the surfaces 6 of the spacer section. More precisely, each section 10 comprises an end fitting or abutment portion 11, a central portion 15 provided with spacing reliefs 6 on one of its faces, and an end fitting or abutment portion 12. One of the fitting portions (indicated by 11 in the illustrated embodiment) is raised with respect to the plane in which lies the remaining portion of the section 10, so as to receive under itself the fitting portion (12 in the Figures) of as adjacent section to which it is connected.

In accordance with the invention, there are provided co-operating longitudinal guide means and radially engagement means, respectively formed as parallel slots 9 having an enlargement or widening 3 formed on the fitting portion 11, and corresponding reliefs 8 provided with a stem movable within such slots 9 and with an enlarged head formed on the fitting portion 12. Of course the mutual positions of the co-operating sections could be exchanged. Preferably the reliefs 8 are shaped like Ts.

The T-shaped reliefs are fitted into proper seats of the reference grooves 3 and come into contact with rows of teeth 13 -14 located at the ends 11 - 12 of the spacer section. By advancing the end 11 of the spacer section over the end 12, the T-shaped reliefs are engaged into the eyelets in the base of the spacer, thanks to L-shaped engagement members on the longitudinal sides that maintain the two ends firmly joined together through a snap engagement of the teeth rows so as to prevent their sliding out. Two pins 19 maintain the two toothed ends aligned one to the other. The tightening is then accomplished through the pulling action of a suitable tool provided with engagement portions to be received in the seats 20, 21.

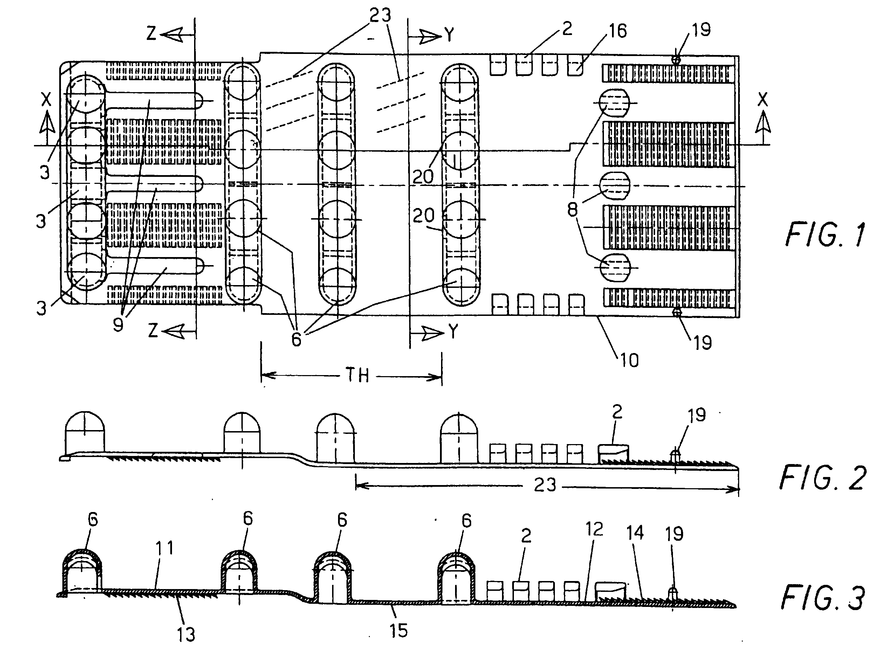

According to an alternate embodiment of the invention, the collar (i.e. the section) is formed of a heath-shrinkable resin, particularly a blend of a plastic resin and a portion (indicated by TH in Figures 1-3) provided with a heat memory. In this embodiment the tightening is accomplished by carrying the assembled collar at a temperature comprised between 60° and 90° by means of a heat source whereby the zone TH will shrink by a predetermined amount, thus squeezing the collar around the pipe.

According to the invention, co-operating guide means and engagement means are provided in the fitting portions 11, 12 of each section. More precisely, in the embodiment illustrated in the Figures, parallel slots 9 are formed on the portion 11, such portion comprising a widening 3 at that outer end located below the spacer 6 in the illustrated embodiment. On the end portion 12 there are formed corresponding reliefs 8 provided with a stem adapted to move within the slot and with an enlarged head. The width of the head can pass through the widening 3 of the slot, but not through the slot. A housing 7, disposed under the pad 10, is connected to the slot 9 that continues and in the same direction.

Further, the terminal length of an abutment or fitting portion (11 in the Figure) is narrower, and the other fitting portion (12 in the Figure) is provided with projecting guides 16 for laterally and radially retaining the ends connected to each other of two adjacent sections 10.

In the connection area between the end portion 12 and the central portion 15 there are provided profiles 16 for engaging the lateral edges of the portion 11 of the adjacent section. The centring ribs are partially hollow and longitudinally wavy, with their ends bevelled to form a taper useful for going beyond possible obstacles that can be present inside a pipe, and with a transversely hemispherical shape to reduce the friction.

According to a further characteristic of the invention, the inner surface of the sections 10 forming the spacer is provided with interrupted projections 23, with a longitudinal or slightly inclined pattern, preferably with an angle comprised between zero and 30°. Such projections increase the gripping zone on the pipe or its coating, while preventing continuous transverse cuttings on the above surfaces that could cause or favour breaks of the coating covering the pipe.

Hereinafter the use of the spacer sections and the associated advantages will be discussed. When assembling the spacer, the reliefs 8 are inserted into the housings 3 of an adjacent section, then the end 12 is advanced into the end 11 in a guided manner by the slots 9, also thanks to a housing 7 formed under the pad 10 connected to the slot 9 that continues and in the sane direction. The slots 9 co-operating with the reliefs 8 prevent the detachment of the parts, thus increasing the spacer stability, and act as further guide sections in addition to the guides 2 located at the two ends of the portion 11. Such slots-reliefs assembly also accomplishes the task of lateral and upper guides of the ends 12 during the advancing. The rows of teeth in 11 (4) and in 12 (5), parallel to the transverse axis of the spacer, retain the ends 11 and 12 in the desired position.

Two or more sections are joined together to form a peripheral ribbon or crown the length of which is adapted to completely and loosely wrap the pipe. The sections are then tightened by means of a suitable (geared down) tool. This tool can be a conventional tool, but preferably according to the invention is a so-called dynamometric tool, i.e. capable of applying a given maximum force to tighten the sections. This way the breaking of the spacer sections during the tightening due to excessive forces is prevented. The spacer sections of the invention are manufactured of plastic materials or compounds that are electrically non-conducting and bad heat-conducting.

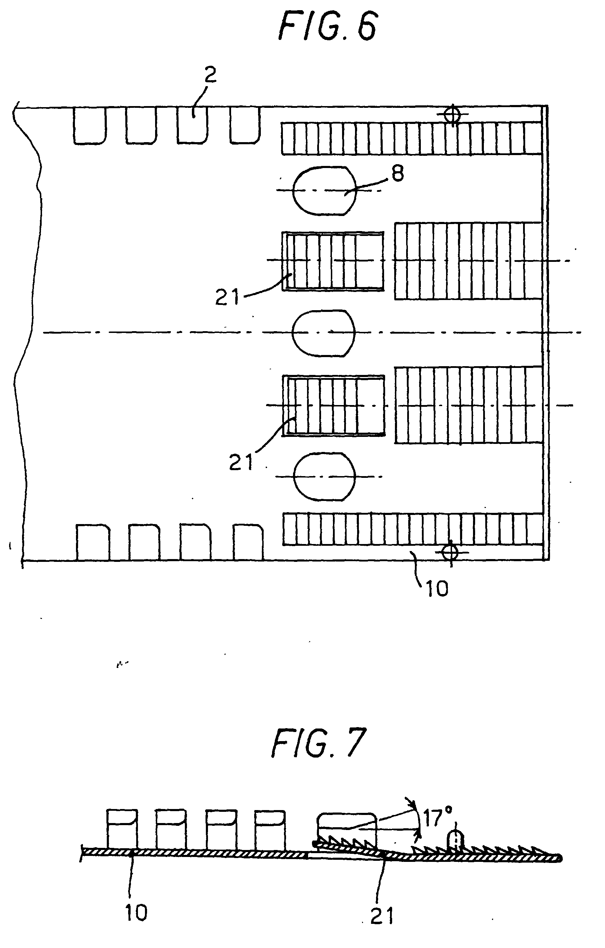

Figures 6 and 7 illustrate an embodiment of the flexible spacer section wherein in the lower part of the toothed area 14 there have been provided peripheral cuts forming two pliable or flexible tabs. When the two end portions 11 and 12 are fitted one into the other, an interference is obtained that prevents the sliding between the two portions. Moreover, the plays or gaps between the teeth of portions 11 and 12 are preferably realised so as to require a modest effort for tightening the spacing collars, to avoid using special tools.

Although the invention has been illustrated with reference to preferred embodiments, it is generally susceptible of different applications and further modifications falling within the scope of the invention as will be evident to the skilled of the art.

## Claims

1. A flexible spacer section for assembling a spacer to be applied onto a pipeline portion to be inserted inside a larger diameter pipe or casing, said section comprising a central portion (15) provided with spacing reliefs (6) on one of its faces, and two fitting end portions (11, 12) provided with teeth for joining two adjacent end portions, characterized in that co-operating means (3, 8, 9) are provided on said fitting portions (11, 12) of said spacer section for longitudinally guiding and radially engaging two adjacent fitting end portions (11, 12).

2. A spacer section as claimed in claim 1, characterized in that said co-operating longitudinal guide and radial engagement means comprises parallel slots (9) provided with a widening (3) formed on one of said fitting portions (11), and corresponding reliefs (8) provided with a stem adapted to move within said slots (9) and with an enlarged head formed on the other (12) of said fitting portions.

3. A spacer section as claimed in claim 1 or 2, characterized in that said reliefs (6) have a cylindrical cross-section profile, and a transversely wavy configuration with respect to the spacer longitudinal axis.

4. A spacer section as claimed in claims 1 to 3, characterized in that the inner surface of the sections (10) forming the spacer is provided with interrupted projections (23) with a longitudinal or slightly inclined pattern with an angle comprised between zero and 30°.

5. A spacer section as claimed in claims 1 to 4, characterized by pliable or flexible tabs in the lower part of the toothed area (14) whereby when said two end portions (11, 12) are fitted one into the other, an interference is obtained that prevents the sliding back between said two portions.

6. A spacer section as claimed in claims 1 to 5, characterized by providing a portion (TH) made of a heath-shrinkable resin that shrinks by a predetermined amount when the section is heated to a temperature between 60° and 90°, thus squeezing the collar around the pipe.

7. A spacer for pipelines comprising a plurality of spacer sections as claimed in the preceding claims.
